# EUROPEAN PATENT SPECIFICATION

(11) **EP 0 722 062 B1**
(45) Date of publication and mention of the grant of the patent: **14.06.2000**
(21) Application number: 95200082.6
(22) Date of filing: 13.01.1995
(51) Int. Cl.: F16L 3/137, H02G 3/32

(54) **Device for supporting elongated objects such as cables**
Halterung für langgestreckte Gegenstände, z. B. Kabel
Dispositif pour le support d'objets allongés, tels que câbles

(43) Date of publication of application: 17.07.1996
(73) Proprietor: Fokker Technology B.V., 1438 AN Oude Meer (NL)
(72) Inventor: Nagtegaal, Ron, NL-3648 JM Wilnis (NL); Schouten, Gerard, NL-1851 MA Heiloo (NL)
(74) Representative: de Bruijn, Leendert C.

(56) References cited:
- DE-U- 8 123 633
- FR-A- 2 636 405
- US-A- 3 185 758

## Description

The invention relates to a device for supporting elongated objects such as cables, bundles of cables, tubes, sheaths or the like, comprising at least one cradle forming a housing with an at least approximately shape of an outwardly open V, said housing being used as transverse support for said objects, and means for clamping said objects to said cradle.

### Technical background of the invention.

In conventional installation of a cable, cable loom or pipe, or in general installation of lines, in a aerospace vehicle such as an aircraft, loop style clamps are used. These are clamps of metal, having two leg portions and a loop portion. The leg portions include passages through which a screw may pass in order fix the clamp to the aircraft structure. Most clamp devices are cushioned, the cushions generally are profiled to improve the tightness of the fit around the cable loom or pipe. Loop style clamps and cushions are described in US 4 441 677, US 3 995 795, US 3 856 245 and US 4 189 807.

Although the use of these loop style clamps generally results in an acceptable cable or pipe fit, their installation and removal is labour intensive and time consuming. The quality of the clamping is greatly dependant on the selection of the correct diameter in relation to the cable loom or pipe diameter. This results in numerous types and sizes, leading to an increased risk for mistakes as well as uneconomically large stocks.

Another conventional way to install a cable, a cable loom or pipe is the use of support brackets in combination with cable tie-down straps. Suitable straps are for example defined by the Military Specification MS3367 and MS3368. Using straps makes the installation and removal much easier and less time consuming. The cable support brackets generally used in combination with such straps are characterised by the fact that they include a cradle for the cable loom. The cradle has in general the shape of an outwardly open V, and is fixed on a base. Typically these type of cable support brackets are injection moulded products. The cable support bracket is fixed with fastening means, such as screws or clips, to the aircraft structure. The bundle of cables is placed in the V-shaped cradle and secured thereto with clamping means, such as the above-mentioned plastic, self clinching tiedown strap. Such cable support brackets with V-shaped cradles are described in US 3 632 069, EP 0 054 478, EP 0 319 410, EP 0 459 904 and EP 0 613 225.

Although installation of cables with V-shaped support brackets in combination with tiedown securing means as described by the above- mentioned publications is quicker, less labour intensive and less expensive, the connection is more prone to axial and lateral displacement of the lines. Displacement of the cable in relation to the V-shaped cradle of the support bracket, cause damage to the top coat of the cable due to chafing. Also the distances of the support brackets relative to each other must be carefully chosen to avoid sagging.

### Summary of the invention.

It is an object of this invention to improve the V-shaped support bracket and a tiedown strap combination by adding a cushion feature resulting in a device providing a connection equally strong to the cushioned loop style clamp but less labour consuming, easier to install and less risk of wrong choices because it may be standardized relative to the V-shaped cradles support brackets that are used to a single type and size for all applications.

Another object of the invention is to prevent displacements, deformations, topcoat damages and other cable connection related problems, wherein the term "cable" may include a single electrical wire, a bundle of electrical wires or cables, a hydraulic pipe or alike.

Yet another object of the invention is a connection of a cable to its support bracket which is applicable for trajects of cables with or without bends inside as well as outside the pressurized fuselage of an aircraft or a vehicle alike. In order to effectuate the connection according to the invention, the cushion has a specific configuration which will be explained furtheron in the description to the invention.

The device as proposed according to the invention for supporting elongated objects such as cables, bundles of cables, tubes, sheaths or the like, comprises at least one cradle forming a housing with an at least approximately shape of an outwardly open V, said housing being used as transverse support for said objects, and means for clamping said objects to said cradle, whereby
- said cradle comprises two parallel faces which are transverse to said elongated objects and each comprising a V-notch, the V-notches being aligned, and comprises a spacer between said two parallel faces, the thickness of said two faces and the length of said spacer determining the width of the cradle, and whereby
- said clamping means has an elongated shape and abuts around said spacer between said faces,
whereby the device comprises furthermore
- an elongated cushion of soft, rubberlike, resilient material, positioned on top of said outwardly open V side of the cradle and comprising passages near its opposite ends, whereby the elongated clamping means extend through said passages,
   - the width of said cushion being at least equal to said width of the cradle and
   - the length of said cushion being at least sufficient to accommodate said passages near its opposite ends.

### Brief description of the drawings.

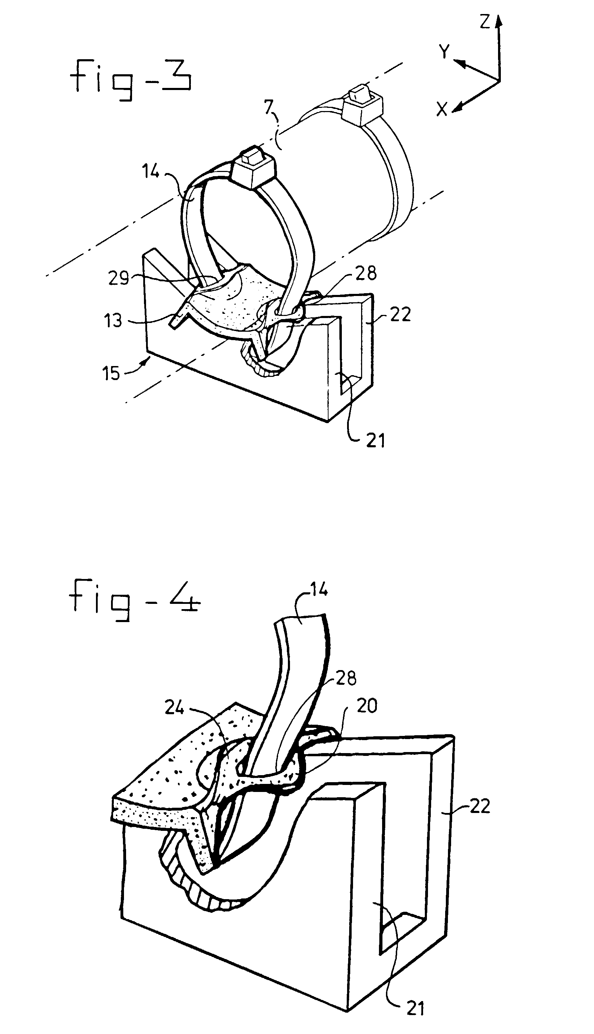

The invention will be explained in more detail with reference to the attached drawings of which:
FIGURE 1
   is a perspective view of a prior art connection of a bundle of electrical wires to a V-shaped cable support by a tie down strap.
FIGURE 2
   shows the device according to the invention prior to use.
FIGURE 3
   shows the device according to the invention in operation.
FIGURE 4
   shows a detail of FIGURE 3.
FIGURE 5
   illustrates a preferred embodiment of the cushion.
FIGURE 6
   illustrates a cushion embodiment to be used for a cradle with three parallel faces or for two adjacent cradles.
FIGURE 7
   shows other embodiments of the cushion in cross sections.

### Detailed description of drawings.

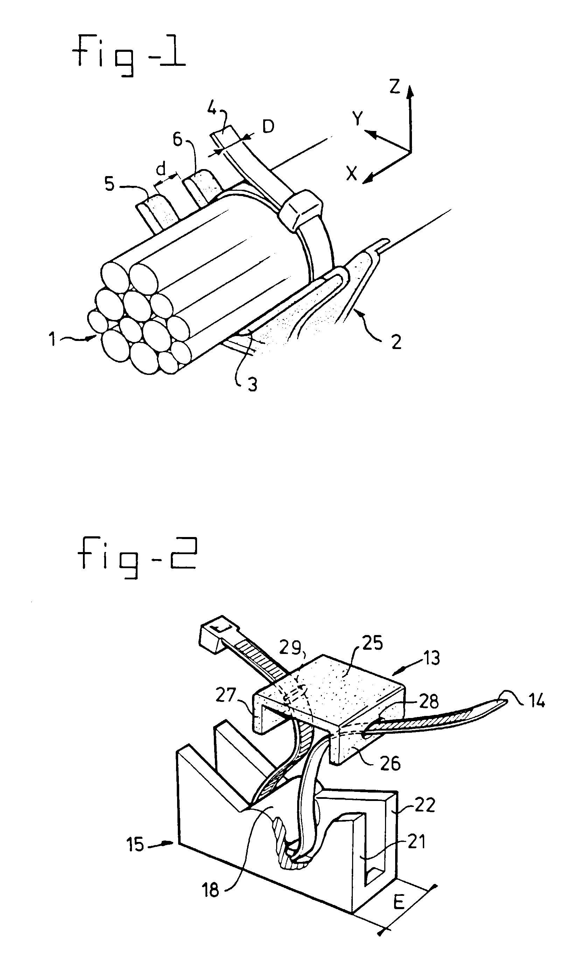

FIGURE 1 shows the prior art way of installing of, for example, a bundle of electrical cables. Cable loom 1 extends in direction x in the cradle 3 of cable support bracket 2 and is fixed in this position by a plastic self clinching strap 4. Width D of strap 4 is somewhat smaller than width d of the gap between the two cradle support faces 5 and 6. The connection between the cable loom 1 and the bracket 2 should effectively fix the cable loom in positive and negative x-, y- and z- directions of movement in order to withstand shock and vibration in those directions. However, this type of connection still allows unwanted movement of the cable looms, especially in direction x. Also when the cables are installed in a traject with bends, movement in more directions is noticeable.

Cable deformations and topcoat damages are additional problems related to the prior art use of cable supports and straps.

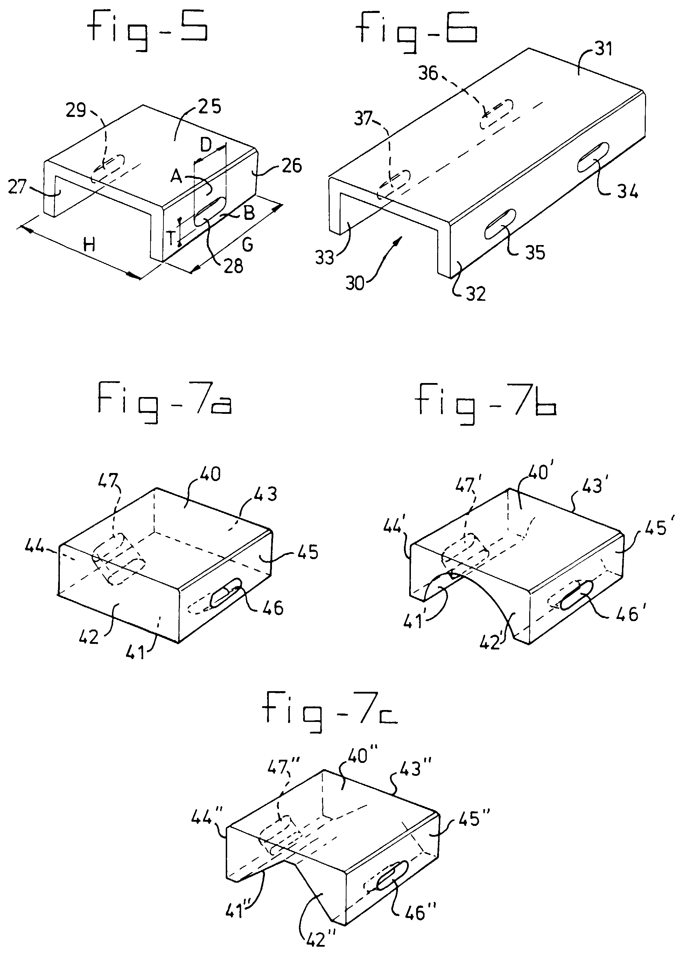

FIGURE 2 shows the individual parts of the device according to an embodiment of the invention before the strap is tightened and also a general view on a preferred embodiment of the cushion, which according to the invention is added to the clamp. The clamp 15 comprises two parallel faces 21, 22, each comprising a V-notch at the upper side, both V-notches being aligned, and comprises furthermore a spacer 18 between said parallel faces. The thickness of said faces 21, 22 and the length of said spacer 18 determines the width E of the cradle. The cushion 13, which is illustrated separately in FIGURE 5, has in the shown embodiment a U-shaped cross section with a top section 25 and two legs 26 and 27. Each of said legs comprises a passage 28, 29 respectively. Cable strap 14 is looped through passage 29, around cradle spacer 18 and through passage 28. Cushion 13 is in general dimensioned in such a way that the width G of cushion 13 is at least equal to and preferably greater than width E of cable support cradle 15, creating overlap portions on both faces of the cradle.

In FIGURE 3 a cable loom (shown only in phantom lines) installed by means of a clamp according to the invention is shown. Cable loom 7 is supported by both side faces 21, 22 of cradle 15. Cushion 13 is positioned between cable loom 7 and cradle 15. Strap 14 is looped around cable loom 7, through passages 28 and 29 and around the spacer 8 as is shown in more detail in FIGURE 4.

Also as can be seen by comparison of FIGUREs 2 and 3, length H of cushion 13 is increased after installation, due to the deformation of the resilient cushion 13. However, in order to effectuate a proper deformation of the cushion and a satisfying connection it is necessary that length H of the deformed cushion is smaller than length F of the cradle, but at least larger than the diameter S of the cradle spacer 18 of cable support cradle 15.

FIGURE 4 shows in more detail the deformed cushion 13 after installation of the cable loom. Deformed portion 20 is wedged in a gap between the faces 21, 22 of the cable support cradle, and deformed portion 24 is wedged between cable tie wrap and cable loom. These deformations and their position effectively immobilises the cable loom when the cable tie is tightened (and closed). Movement in positive or negative x-, y- or z-directions are positively prevented. Also rotational movement of cable loom is eliminated, as are deformations, top coat damage and chafing. The portions of the cushion overlapping the two faces of the cable support cradle prevent cable damage in installed cable bendings.

FIGURE 5 is an illustration showing the preferred embodiment of the cushion in detail. The cushion is of an inverted U-shape, with top surface 25, two side walls 26, 27 each having one passage 28, 29, whereby the passages 28, 29 are opposite of each other. Each passage has in this embodiment a width D and a height T generally equal to or somewhat bigger than respectively the width and the thickness of the strap, such that the strap can put easily through the passages. De height (T) of the passage in the side wall leaves an upper edge (A) and lower edge (B).

During experimental testing of the immobility in x-, y- and z-direction of the cable/cradle-connection, in particular bundles of electrical cables which include for example a dual wall insulation of cross-linked extruded modified fluoropolymer (XL-ETFE), tied-down by a plastic tiedown strap conform MS MS3367/MS3368 to a polyamide support shaped conform EP-B 0 054 478, the effect was studied of the deformated bulging portions 20, 24 at the degree of immobilising of the connected line. Satisfying results were found with for example inverted U-shaped cushions illustrated by FIGURE 5, made of nitrile butadiene rubber Mil-C-85052/1 or ethylene propylene rubber Mil-C-8603. Test results showed that an undeformed cushion has to fulfil the following conditions:
- the passage in the side wall should be enclosed by enough material out of the surrounding wall member of the cushion. In the absence for example of the lower edge (B) of the side wall then the line will not be effectively immobilised. Preferably the upper edge width (A) should be greater than the lower edge width (B). A ratio A/B = 2.7 whereby the thickness of the side wall at the passage was 1.5 mm, showed good results.
- the width (G) of the cushion should be bigger than the width (E) of the cradle. The width G was by preference: 1.1 E < G < 1.5 E.
- the length (H) of the cushion should be smaller than the length (F) of the cradle, but bigger than the diameter of the cradle spacer.
Further the hardness of the cradle should be 50 < Shore < 65, preferably Shore 60.

Dimensions of such a cushion are for example: length and width (resp. H and G) 16 mm, height (A+B) of a side wall = 6.5 mm, B = 1.75 mm, D = 5.15 mm, T = 1.5 mm and a wall thickness of 1.5 mm.

FIGURE 6 illustrates a cushion embodiment to be used for instance for a cradle with three parallel faces or for two adjacent cradles. The cushion, indicated in general by 30, comprises an upper section 31 and two leg sections 32 and 33. The leg section 32 comprises two passages 34, 35 for accommodating a binding strip and the leg section 33 has the passages 36 and 37.

Yet other embodiments of the cushion are presented in FIGURE 7. FIGURE 7A illustrates a very basic embodiment of the cushion consisting of a rectangular elongated piece of resilient, rubbery material. The cushion has a top surface 40, a bottom surface 41, two side surfaces 42, 43, and two end surfaces 44, 45. The passages 46, 47, through which the binding strip has to be guided, are extending in this embodiment from the bottom surface 41 to the end surfaces 44, 45 respectively.

The FIGURES 7B, 7C illustrate more sophisticated embodiments of the cushion. In both embodiments the bottom surface comprises an excavation which extends between the two side surfaces. In FIGURE 7B the excavation has a circular shape whereas in FIGURE 7C the excavation has a trapezoidal shape. In both cases the passages for guiding the binding strip are extending from the excavated surface to one of the respective end surfaces.

## Claims

1. Device for supporting elongated objects such as cables, bundles of cables, tubes, sheaths or the like, comprising at least one cradle forming a housing with an at least approximately shape of an outwardly open V, said housing being used as transverse support for said objects, and means for clamping said objects to said cradle, whereby
- said cradle comprises at least two parallel faces which are transverse to said elongated objects and each comprising a V-notch, the V-notches being aligned, and comprises a spacer between said parallel faces, the thickness of said faces and the length of said spacer (or spacers) determining the width of the cradle, and whereby
- said clamping means has an elongated shape and abuts around said spacer between said faces,
whereby the device comprises furthermore
- an elongated cushion of soft, rubberlike, resilient material, positioned on top of said outwardly open V side of the cradle and comprising passages near its opposite ends, whereby the elongated clamping means extend through said passages,
- the width of said cushion being at least equal to said width of the cradle and
- the length of said cushion being at least sufficient to accommodate said passages near its opposite ends.

2. Device according to claim 1, whereby said cushion has in general a rectangular shape with a top and bottom surface, two side surfaces extending parallel to said parallel cradle faces and two end surfaces extending transverse to said cradle faces ,whereby furthermore said passages are extending from the bottom surface of said cushion to an end surface.

3. Device according to claim 1, whereby the bottom of said cushion comprises an excavation extending between said two side surfaces.

4. Device according to claim 3, whereby said excavation is of rectangular shape such that the cushion obtains a U-shape with a top section and two legs at both ends of said top section, whereby said passages are extending mainly through said legs.

## Patentansprüche

1. Halterung für langgestreckte Gegenstände, z.B. Kabel, Kabelbunde, Rohre, Hülsen oder ähnliches, bestehend aus zumindest einem Gestell, das eine Einkerbung bildet und zumindest die ungefähre Form eines nach außen offenen V aufweist, wobei die Einkerbung als schräg verlaufender Träger für die Gegenstände benutzt wird, sowie ferner aus einer Vorrichtung zum Festklemmen der Gegenstände an dem Gestell, dadurch gekennzeichnet, daß
- das Gestell zumindest zwei parallel verlaufende Seiten aufweist, die schräg zu den langgestreckten Gegenständen angeordnet sind und jeweils eine V-Kerbe aufweisen, wobei die V-Kerben ausgerichtet sind, sowie ferner ein Abstandsstück zwischen den beiden parallel verlaufenden Seiten, wobei die Stärke der Seiten und die Länge des Abstandsstücks (oder der Abstandstücke) die Breite des Gestells bestimmen, wobei
- die Klemmvorrichtung eine langgestreckte Form aufweist und um das Abstandsstück anliegt zwischen die Seiten,
wobei die Halterung ferner
- einen langgestreckten Puffer aus einem weichen, gummiartigen, elastischen Material aufweist, der oben an der Seite des nach außen offenen V des Gestells angeordnet ist und mit Durchlässen in der Nähe der gegenüberliegenden Enden versehen ist, wobei sich die langgestreckte Klemme durch diese Durchlässe erstreckt,
- und die Breite des Puffers zumindest der Breite des Gestells entspricht und
- die Länge des Puffers zumindest ausreicht, um die Durchlässe in der Nähe der gegenüberliegenden Enden aufzunehmen.

2. Halterung nach Anspruch 1, dadurch gekennzeichnet, daß der Puffer eine im allgemeinen rechtwinklige Form mit einer oberen und einer unteren Fläche aufweist, wobei sich zwei Seitenflächen parallel zu den parallel verlaufenden Gestellflächen erstrecken und sich zwei Endflächen schräg zu den Gestellflächen erstrecken und wobei sich ferner die Durchlässe von der unteren Fläche des Puffers zu einer Endfläche erstrecken.

3. Halterung nach Anspruch 1, dadurch gekennzeichnet, daß der Boden des Pufferseine Aushöhlung aufweist, die sich zwischen zwei Seitenfläche erstreckt.

4. Halterung nach Anspruch 3, dadurch gekennzeichnet, daß die Aushöhlung rechtwinklig ist, so daß der Puffer eine U-Form mit einem oberen Bereich und zwei Schenkeln an beiden Enden des oberen Bereichs aufweist, wobei sich die Durchlässe im wesentlichen durch die Schenkel erstrecken.

## Revendications

1. Dispositif pour le support d'objets allongé, tels que câbles, faisceaux de câbles, tubes, gaines ou autres, comprenant au moins un berceau formant un boîtier au moins environ en forme de "V" ouvert vers l'extérieur, ledit boîtier étant utilisé comme support transversal desdits objets, et un moyen de serrage desdits objets contre ledit berceau,
- ledit berceau comprenant au moins deux faces parallèles qui sont transversales auxdits objets allongés et comportent, chacune, une encoche en forme de "V," les encoches en forme de "V" étant alignées, et comprenant une entretoise entre lesdites deux faces parallèles, l'épaisseur desdites deux faces et la longueur de l'entretoise (ou des entretoises) déterminant la largeur du berceau, et
- ledit moyen de serrage présentant une forme oblongue et venant en butée contre ladite entretoise entre lesdites faces,
dans lequel le dispositif comprend, par ailleurs
- un matelassage oblong en un matériau doux, ressemblant à du caoutchouc, résilient, positionnné sur ledit côté en forme de "V" ouvert vers l'extérieur du berceau et comportant des passages près de ses extrémités opposées, les moyens de serrage oblongs s'étendant à travers lesdits passages,
- la largeur dudit matelassage étant au moins égale à ladite largeur du berceau, et
- la longueur dudit matelassage étant au moins suffisante pour contenir lesdits passages près de ses extrémités opposées.

2. Dispositif suivant la revendication 1, dan lequel ledit matelassage présente généralement une forme rectangulaire avec une face supérieure et une face inférieure, deux faces latérales s'étendant parallèlement auxdites faces parallèles du berceau et deux faces d'extrémité s'étendant transversalement auxdites faces du berceau, lesdits passages s'étendant, par ailleurs, de la face inférieure dudit matelassage à une face d'extrémité.

3. Dispositif suivant la revendication 1, dans lequel le fond dudit matelassage comprend une cavité s'étendant entre lesdites deux face latérales.

4. Dispositif suivant la revendication 3, dans lequel ladite cavité est de forme rectangulaire, de sorte que le matelassage ait une forme en « U » avec un segment supérieur et deux jambes aux deux extrémités dudit segment supérieur, lesdits passages s'étendant essentiellement dans lesdites jambes.
